# EUROPÄISCHE PATENTSCHRIFT

(11) **EP 1 432 337 B1**
(45) Veröffentlichungstag und Bekanntmachung des Hinweises auf die Patenterteilung: **15.06.2005**
(21) Anmeldenummer: 02779453.6
(22) Anmeldetag: 02.10.2002
(51) Int. Cl.: A47J 37/12

(54) **FRITTEUSE**
DEEP FRYER
FRITEUSE

(30) Priorität: 02.10.2001 DE 20116149 U; 10.01.2002 WO PCT/EP02/00189
(43) Veröffentlichungstag der Anmeldung: 30.06.2004
(73) Patentinhaber: 3rd Angle (U.K.) Ltd., Highley, Shropshire WV16 6NN (GB)
(72) Erfinder: CURRIE, Neil Anthony, Stourport-on-Severn, Worcestershire DY13 (GB)
(74) Vertreter: Reitstötter - Kinzebach & Partner (GbR)
(86) Internationale Anmeldenummer: PCT/EP2002/011076
(87) Internationale Veröffentlichungsnummer: WO 2003/030697

(56) Entgegenhaltungen:
- EP-A- 0 067 730
- EP-A- 0 138 249
- EP-A- 0 168 359
- EP-A- 0 704 188
- EP-A- 1 025 788
- US-A- 3 712 289
- US-A- 3 908 111
- US-A- 4 591 698
- US-A- 5 245 159

## Beschreibung

Die Erfindung betrifft eine Fritteuse mit einem Frittiergefäß das vollständing aus einem transparenten oder durchscheinenden Material besteht und mindestens einem in dem Frittiergefäß angeordneten Heizkörper.

Derartige Fritteusen sind bekannt, siehe Beispielweise die europäische Anmeldung EP 0 067 730 A. Das Frittiergefäß nimmt ein Frittiermedium, beispielsweise Frittierfett oder -öl auf, welches durch den Heizkörper gegebenenfalls zunächst geschmolzen und anschließend auf eine Temperatur von typischerweise 100 bis 200 °C, insbesondere von 150 bis 190 °C erhitzt wird. In dem erhitzen Fett oder Öl können unterschiedlichste, hier als Frittiergut bezeichnete Nahrungsmittel wie Fleisch, Fisch, Zwiebelringe, Pilze, Gemüse, Chips und ähnliches innerhalb von wenigen Minuten frittiert werden. Der Begriff "frittieren" umfasst im vorliegenden Zusammenhang jegliche Art der Nahrungsmittelbehandlung in heißem Fett oder Öl, wie beispielsweise Braten, Backen oder Garen. Üblicherweise benutzt man zum Frittieren einen das Frittiergut aufnehmenden Korb, der beispielsweise aus einem Drahtgeflecht bestehen kann. Der Korb gewährleistet, dass das Frittiergut sicher und problemlos in das heiße Öl oder Fett eingetaucht und nach Beendigung des Frittiervorgangs wieder entnommen werden kann. Das überschüssige Fett oder Öl kann durch das Drahtgeflecht abtropfen.

Zahlreiche Fritteusen, beispielsweise die von der Anmelderin in der deutschen Patentanmeldung DE 197 14 038 A beschriebene Fritteuse, weisen einen Heizkörper auf, der fest mit dem Frittiergefäß verbunden ist. Der Heizkörper ist dann meist unter dem Boden des Frittiergefäßes befestigt, so dass zunächst das Frittiergefäß und anschließend das in dem Frittiergefäß befindliche Öl oder Fett erhitzt wird. Die Frittiergefäße müssen in diesem Fall eine gute Wärmeleitfähigkeit aufweisen und bestehen daher meist aus Metall. Zum Schutz des Benutzers ist das Frittiergefäß bei derartigen Geräten von einem isolierenden Gehäuse umgeben, damit die Gefahr eines unbeabsichtigten Kontaktes des heißen Frittiergefäßes durch den Benutzer vermieden wird.

Es sind auch Frittiergefäße bekannt geworden, bei denen der Heizkörper im Inneren des Frittiergefäßes angeordnet ist. Vorteile dieses Gerätetyps sind darin zu sehen, dass der Heizkörper direkt mit dem Fett oder Öl in Kontakt steht, so dass ein schnelleres Aufheizen des Frittiermediums gewährleistet ist. Der Heizkörper ist typischerweise als Heizspirale ausgebildet, so dass kleinere Restpartikel des Frittiergutes an dem Heizkörper vorbei auf den Boden des Frittiergefäßes sinken können. Derartige Partikel und Speisereste befinden sich dann nicht mehr in unmittelbarer Nähe des Heizkörpers, sondern im kühleren Bodenbereich des Frittiergefäßes. Bei anschließenden Frittierprozessen verbrennen und zersetzen sich derartige Reste somit in einem deutlich geringeren Umfang als dies beispielsweise bei Frittiergefäßen mit Bodenheizung der Fall ist. Das Frittierfett oder Öl kann dann länger benutzt werden, weil es weniger stark durch Zersetzungsprodukte von Speiseresten belastet wird. Aber auch bei der Fritteuse mit im Frittiergefäß angeordneten Heizkörper besteht das Frittiergefäß selbst üblicherweise aus Metall, beispielsweise aus Edelstahl, emailliertem Stahl oder beschichtetem, unbeschichtetem oder anodisiertem Aluminium.

Bei der Verwendung der bekannten Fritteusen erkennt der Benutzer weder, ob das Frittierfett bereits geschmolzen ist und somit die Heizleistung erhöht werden kann, noch ob das Frittiergut bereits den gewünschten Bräunungsgrad erreicht hat und der Frittiervorgang somit beendet werden kann. Der Benutzer ist daher häufig gezwungen den Deckel der Fritteuse zur Kontrolle des Frittiervorgangs zu öffnen. Meist ist es sogar notwendig, den Frittierkorb zur visuellen Kontrolle des Frittiergutes herauszunehmen. Dies ist nicht nur umständlich und zeitaufwendig, sondern es besteht auch die Gefahr, dass der richtige Zeitpunkt zum Beenden des Frittiervorganges verpasst wird und das Frittiergut folglich verbrennt. Zudem besteht beim häufigen Hantieren von viel Feuchtigkeit enthaltenden Nahrungsmitteln die Gefahr von Verbrennungen durch Fettspritzer.

Der vorliegenden Erfindung liegt daher die Aufgabe zugrunde, eine Fritteuse bereitzustellen, die eine einfache und problemlose Kontrolle des Frittiervorgangs ermöglicht. Dabei soll ein ausreichender Schutz des Benutzers vor Fettspritzem, aber auch vor einem zufälligen Kontakt mit dem heißen Frittiergefäß gewährleistet sein.

Gelöst wird diese Aufgabe durch die Fritteuse mit den Merkmalen des vorliegenden Anspruchs 1. Vorteilhafte Weiterbildungen der erfindungsgemäßen Fritteuse sind Gegenstand der abhängigen Ansprüche.

Gegenstand der vorliegenden Erfindung ist demnach eine Fritteuse mit einem Frittiergefäß das vollständig aus einem transparenten oder durchscheinenden Material besteht und mindestens einem in dem Frittiergefäß angeordneten Heizkörper, die dadurch gekennzeichnet ist, dass das Frittiergefäß zumindest teilweise von einen Schutzmantel umgeben ist, der aus einem transparenten oder durchscheinenden Material besteht. Durch Verwendung eines zumindest teilweise transparenten oder durchscheinenden Frittiergefäßes kann der Benutzer den Frittiervorgang unmittelbar verfolgen und den Bräunungsgrad des im heißen Öl oder Fett schwimmenden Frittiergutes kontrollieren. Ein Eingriff des Benutzers ist erst am Ende des Frittiervorgangs erforderlich, so dass sowohl die Verletzungsgefahr deutlich reduziert als auch die Gefahr eines Verbrennens des Frittiergutes drastisch verringert wird. Nachdem bei allen der Anmelderin bekannten, auf dem Markt befindlichen Friteusen das Frittiergefäß aus undurchsichtigem Metall besteht und eine optische Kontrolle des Frittiergutes im heißen Öl nicht möglich ist, war es überraschend, dass mit der erfindungsgemäßen Lösung eine Fritteuse realisiert werden, welche eine derartige Kontrolle erlaubt und gleichzeitig die Funktionalität und Betriebssicherheit herkömmlicher Fritteusen aufrechterhält.

Gemäß einer bevorzugten Ausführungsform der Erfindung besteht das Frittiergefäß vollständig aus einem transparenten oder durchscheinenden Material, so dass eine optimale optische Kontrolle des Frittiervorgangs durch den seitlichen Umfang des Frittiergefäßes gewährleistet ist. Turbulenzen und schäumenden Oberflächen des Frittiermediums, die bei herkömmlichen Fritteusen einen optische Kontrolle von oben unmöglich machen, behindern bei der erfindungsgemäßen Fritteuse die Kontrolle nicht. Vorzugsweise besteht das Frittiergefäß aus Glas, beispielsweise einem wärmefesten Sicherheitsglas, aus einem temperaturbeständigen transparenten Kunststoffmaterial oder auch aus einem durchscheinenden Metall oder einer Metalllegierung. Das Frittiergefäß kann auch aus einer Kombination dieser Materialien bestehen, wobei aber Frittiergefäß aus Glas oder Kunststoff bevorzugt sind. Das Frittiergefäß kann farblos oder auch farbig sein, beispielsweise eingefärbt oder bemalt, solange die optische Kontrolle des Frittierguts nicht nennenswert beeinträchtigt ist. Der Begriff "temperaturbeständig" bedeutet im vorliegenden Zusammenhang, dass der transparente Kunststoff bis zu typischen Frittiertemperaturen von ca. 200 °C im wesentlichen formbeständig bleibt, nicht erweicht und sich auch nicht zersetzt.
Der Heizkörper ist vorteilhafterweise im Bereich des Bodens des Frittiergerätes angeordnet. Besonders bevorzugt ist der Heizkörper herausnehmbar, so dass das transparente Frittiergefäß leicht gereinigt werden kann. Der Heizkörper kann beispielsweise in Form einer Heizspirale angeordnet sein. Der Heizkörper ist vorteilhaft mit einem Halter verbunden, der beispielsweise außen an dem Frittiergefäß eingehängt oder anderweitig befestigt werden kann. In dem Halter ist vorteilhaft ein Thermostat zur Regelung der Heizleistung des Heizkörpers angeordnet: Dazu können beispielsweise ein oder mehrere Temperaturfühler vorgesehen sein, die in der Nähe des Heizkörpers, vorteilhaft direkt an dem Heizkörper, angeordnet sind und mit diesem in thermischem Kontakt stehen. An dem Halter können geeignete Bedienelemente angeordnet sein, die das Ein- und Ausschalten des Heizkörpers ermöglichen. Üblicherweise wird der Heizkörper elektrisch betrieben, so dass die Bedienelemente den elektrischen Kontakt mit einem in den Halter münden Stromkabel schalten. Da ein optimales Frittierergebnis für unterschiedliche Nahrungsmittel unterschiedliche Frittiertemperaturen erfordert, ist die Frittiertemperatur vorzugsweise vom Benutzer einstellbar. Dazu kann die Friteuse an dem Halter für den Heizkörper einen von dem Benutzer einstellbaren Temperaturregler aufweisen, der wiederum den Thermostaten steuert. Üblicherweise wird Frittierfett bei sehr geringer Heizleistung zunächst geschmolzen und anschließend das flüssige Fett oder ein bereits bei Zimmertemperatur flüssiges Öl auf die eigentliche Frittiertemperatur aufgeheizt, die üblicherweise zwischen 100 und 200 °C liegt. Der Thermostat umfasst üblicherweise auch geeignete Sicherungen, welche die Stromzufuhr unterbrechen, wenn ein vorgegebener Temperaturgrenzwert, beispielsweise 210 °C überschritten wird.

Wenn mit fast 200 °C heißem Frittieröl gearbeitet wird, besteht für den Benutzer eine erhebliche Verletzungsgefahr, wenn er mit dem Frittiergefäß unbeabsichtigt in Kontakt kommt. Die für den Benutzer zugängliche Außenhülle der Fritteuse sollte daher stets eine deutlich geringere Temperatur als das Frittiermedium aufweisen. Bei der erfindungsgemäßen Fritteuse besteht das Frittiergefäß bevorzugt aus Glas oder einem transparenten Kunststoff, d.h. aus Materialien, die eine üblicherweise eine relativ geringe Wärmeleitfähigkeit aufweisen. Daher kann das Frittiergefäß beispielsweise doppelwandig mit einem evakuierten Zwischenraum ausgebildet sein, so dass das Temperaturniveau der Außenwand deutlich unterhalb der Temperatur des Frittiermediums liegt. Besonders bevorzugt ist das Frittiergefäß aber in einem Gehäuse angeordnet, welches verhindert, dass der Benutzer direkt mit dem heißen Frittiergefäß in Kontakt kommt. Damit der Vorteil einer optischen Kontrolle des Frittiervorgangs erhalten bleibt, muss das Gehäuse zumindest teilweise ebenfalls transparent oder durchsichtig sein. Dazu kann das Gehäuse zumindest teilweise aus einem durchsichtigen Kunststoffmaterial bestehen. Das Gehäuse kann aber beispielsweise auch Metall- oder Kunststoffstreben aufweisen, zwischen denen offene Zwischenräume ausgespart sind, durch die der Benutzer ins Innere des Frittiergefäßes blicken kann. Die Abmessungen und Abstände der Streben sind dabei so gewählt, dass einerseits eine ungehinderte optische Kontrolle gewährleistet ist und andererseits ein zufälliger Kontakt des Frittiergefäßes durch die Hände des Benutzers verhindert wird. Die Streben können beispielsweise als horizontal verlaufende Ringe oder Ringsegmente ausgebildet sein. Das Frittiergefäß ist vorteilhaft so in dem Gehäuse angeordnet, dass der thermische Kontakt zwischen Frittiergefäß und Gehäuse minimiert wird. Bevorzugt bestehen daher lediglich einige wenige Kontaktpunkte zwischen Frittiergefäß und Gehäuse, an denen beispielsweise Silikon- oder Teflonscheibchen oder ähnliches angeordnet sein können, welche den Wärmeübergangskoeffizienten zwischen Frittiergefäß und Gehäuse weiter reduzieren und einen weichere Auflage als beispielsweise die Metallstreben selbst bilden. Besonders bevorzugt ist das Frittiergefäß herausnehmbar in dem Gehäuse angeordnet, was die Reinigung der erfindungsgemäßen Fritteuse weiter vereinfacht.

Aus den oben angesprochenen Sicherheitserwägungen heraus kann die erfindungsgemäße Fritteuse zusätzlich außen, zumindest teilweise, von einem Schutzmantel umgeben sein. Der Schutzmantel verhindert, dass im Falle einer Beschädigung des Frittiergefäßes Bruchstücke des Gefäßes oder heißes Fett seitlich wegfliegen und den Benutzer gefährden können.

Schutzmantel besteht bevorzugt aus einem transparenten oder durchscheinenden Material, beispielsweise aus Kunststoff, Glass oder einer Kombination dieser Materialien, wobei ein Schutzmantel aus Kunststoff besonders bevorzugt ist. Der Schutzmantel kann ebenfalls farbig oder farblos ausgebildet sein. In jedem Fall ist der Schutzmantel so gestaltet, dass die Beobachtung des in dem durchsichtigen oder durchscheinenden Frittiergefäß schwimmenden Frittierguts nicht beeinträchtigt wird.

Der Schutzmantel umgibt das Frittiergefäß vorzugsweise im seitlichen Bereich und ist so ausgebildet, dass das Öl im Fall einer Beschädigung des Frittiergefäßes in kontrollierter Weise nach unten in den Bodenbereich der Fritteuse geleitet wird. Dazu kann der Schutzmantel einen geschlossenen Bodenbereich aufweisen und so das Frittiergefäß halbkugelartig umschließen. Vorzugsweise ist der Bodenbereich des Schutzmantels aber offen, so dass das Öl in den Bodenbereich der Fritteuse fließen kann. Der Bodenbereich der Friteuse kann ebenfalls geschlossen oder, vorzugsweise, mit, gegebenenfalls verschließbaren, Auslassöffnungen versehen sein, über die das Öl abfließen kann. In jedem Fall ist der Bodenbereich der Fritteuse vorzugsweise so ausgebildet, dass nach einer Beschädigung des Frittiergefäßes des maximale Ölniveau unter des Heizeinrichtung und die elektrischen Kontrollmittel sinkt, so dass die Fritteuse auch in einem Störfall elektrisch sicher ist.

Wenn Auslassöffnungen im Bodenbereich der Fritteuse oder im Bodenbereich des Schutzmantels angeordnet sind, wird man vorzugsweise Filtermittel, beispielsweise Öffnungen mit geringem Durchmesser, Siebe, Netze oder Gitter oder auch poröse Filtermaterialien vorsehen, die das Ausströmen des Öls nach unten aus der Friteuse kontrollieren und insbesondere Bruchstücke des Frittiergefäßes zurückhalten, so dass eine Gefährdung des Nutzers beispielsweise durch Glassplitter vermieden werden kann. Das Öl strömt vorzugsweise so langsam aus, dass es weitgehend Abkühlen kann und daher keine Verletzungsgefahr durch heißes Öl mehr besteht. Die Filtermittel können aus porösen Glasmaterialen, beispielsweise einem Silikat-Aerogel, einem Kunststoffmaterial, Metall oder einem Gewebe bestehen

Vorzugsweise sind Befestigungsmittel zum Fixieren des Schutzmantels in der Friteuse vorgesehen. Die Befestigungsmittel sind vorteilhaft als Halterungen ausgebildet, die den Schutzmantel an dem Gehäuse der Fritteuse fixieren. Der Schutzmantel kann permanent oder lösbar an dem Gehäuse befestigt sein. Insbesondere im letzteren Fall wird der Schutzmantel vorzugsweise abwaschbar, beispielsweise spülmaschinenfest ausgebildet sein.

Zwischen dem Frittiergefäß und dem Schutzmantel ist vorteilhaft ein Luftspalt definiert, der eine effektive thermische Trennung des im Betrieb heißen Frittiergefäßes von dem Schutzmantel gewährleistet, so dass der gegebenenfalls von außen zugänglichen Schutzmantel auf einer wesentlich niedrigeren Temperatur gehalten werden kann. Zwischen dem Frittiergefäß und dem Schutzmantel können einige Abstandshalter mit geringer Wärmeleitfähigkeit angeordnet sein. Besonders bevorzugt dienen die Befestigungsmittel für den Schutzmantel gleichzeitig als Abstandshalter für das Frittiergefäß. Die Befestigungsmittel können beispielsweise so ausgebildet sein, dass sie das Frittiergefäß auf ihrer Innenseite und/oder auf ihrem oberen Rand oder ihrer oberen Kante halten.

Bevorzugt umfasst auch die erfindungsgemäße Fritteuse einen herausnehmbaren Korb für das Frittiergut. Ebenso ist vorteilhaft ein abnehmbarer Deckel vorgesehen, der beispielsweise geeignete Dichtlippen aufweisen kann, die auf dem Rand des Frittiergefäßes aufliegen.

Das Frittiergefäß der erfindungsgemäßen Fritteuse kann unterschiedlichste Formen aufweisen, beispielsweise halbkugelförmig, quaderförmig oder zylindrisch ausgebildet sein.

Die Erfindung wird im folgenden unter Bezugnahme auf in den beigefügten Zeichnungen dargestellte Ausführungsbeispiele näher erläutert.

In den Zeichnungen zeigen:
- Figur 1: eine Stirnansicht einer ersten Ausführungsform der erfindungsgemäßen Fritteuse;
- Figur 2: eine Seitenansicht der Fritteuse der Figur 1;
- Figur 3: einen Querschnitt der Fritteuse der Figur 1;
- Figuren 4-7: Varianten der transparenten oder durchscheinenden Frittiergefäße der erfindungsgemäßen Fritteuse;
- Figur 8: eine Stirnansicht einer zweiten Ausführungsform der erfindungsgemäßen Fritteuse im Teilschnitt;
- Figur 9: eine Seitenansicht der Fritteuse der Figur 8 im Teilschnitt;
- Figur 10: ein Detail einer Variante der Fritteuse der Figuren 8 und 9 im Teilschnitt;
- Figur 11: ein Detail einer weiteren Variante der Fritteuse der Figuren 8 und 9 im Querschnitt;
- Figur 12: ein Detail noch einer weiteren Variante der Fritteuse der Figuren 8 und 9 im Querschnitt; und
- Figur 13: eine weiter Variante der Fritteuse der Figuren 8 und 9 im Querschnitt.

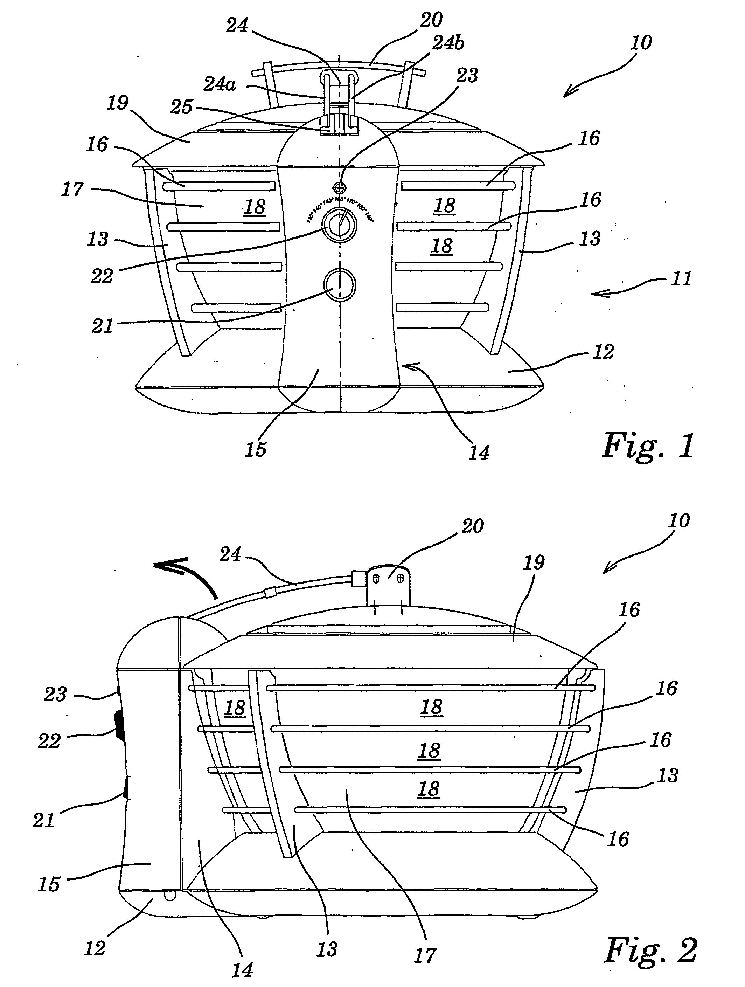

Figur 1 zeigt eine Stirnansicht einer bevorzugten Ausführungsform der erfindungsgemäßen Fritteuse 10. Die Fritteuse 10 weist ein Gehäuse 11 auf, das eine Grundplatte 12 umfasst, von der sich vertikale Träger 13 nach oben erstrecken. Einer der vertikalen Träger ist als Schiene 14 für einen Halter 15 eines (in den Figuren 1 und 2 nicht dargestellten) Heizkörpers ausgebildet. Die Schiene 14 ist insbesondere in der Seitenansicht der Figur 2 gut erkennbar. Zwischen den Trägern 13, 14 sind Sicherungsstreben 16 ausgebildet. In dem durch die Grundplatte 12, die vertikalen Träger 13, 14 und die horizontalen Sicherungsstreben 16 gebildeten topfartigen Gehäuse 11 ist ein transparentes Frittiergefäß 17 angeordnet. Zwischen den horizontalen Sicherungsstreben 16 ist ein Freiraum 18 ausgespart, der es dem Benutzer ermöglicht, das in dem Frittiergefäß 17 in heißem Öl schwimmende (in den Figuren nicht dargestellte) Frittiergut optisch zu kontrollieren. Auf der Fritteuse 10 ist ein abnehmbarer Deckel 19 angeordnet, der einen Griff 20 aufweist. An dem Halter 15 ist ein als Kippschalter 21 ausgebildeter Ein-/Ausschalter sowie ein Temperaturregler 22 zur Einstellung der gewünschten Frittiertemperatur angeordnet. Der Temperaturregler 22 wirkt mit einem im Inneren des Halters 15 angeordneten Thermostaten zusammen. Eine Betriebsleuchte 23 zeigt an, ob die Fritteuse 10 eingeschaltet ist. In der Darstellung der Figuren 1 und 2 erkennt man außerdem einen Griff 24, der zu einem der Übersichtlichkeit halber nicht weiter dargestellten Frittierkorb gehört. In dem in den Figuren 1 und 2 dargestellten Lagerungszustand ist der Griff 24 platzsparend zurückgeklappt und kann bei Benutzung in Richtung des in Figur 2 dargestellten Pfeils ausgeklappt und in einer Ausnehmung 25 des Halters 15 verankert werden. Zum Herausnehmen des Frittierkorbs kann man die Streben 24a und 24b leicht zusammendrücken und aus der Verankerung in der Ausnehmung 25 des Halters 15 lösen.

Figur 2 zeigt eine Seitenansicht der Fritteuse 10 der Figur 1, wobei dieselben Bauteile mit denselben Bezugsziffern bezeichnet sind.

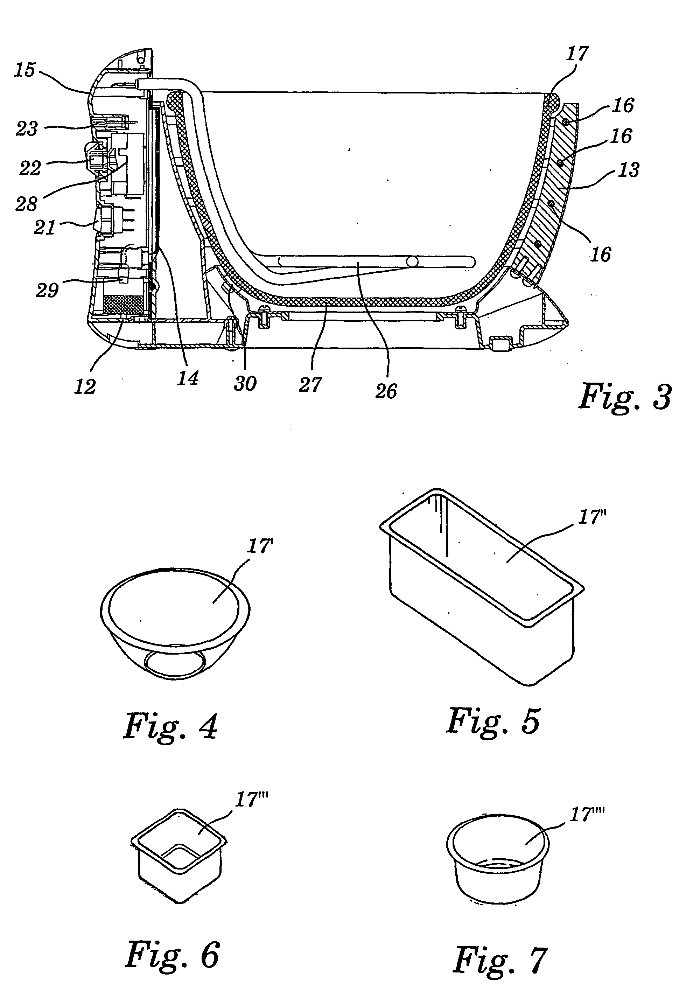

Figur 3 zeigt die Fritteuse in der Orientierung der Figur 2 im Querschnitt. Man erkennt das transparente Frittiergefäß 17, in welchem ein mit dem Halter 15 verbundener Heizkörper 26 herausnehmbar angeordnet ist. Beim Einsetzen des Heizkörpers 26 in das Frittiergefäß 17 wird der Halter 15 auf die Schiene 14 gesetzt und schlägt an der Grundplatte 12 an. Damit ist sowohl eine gleichbleibende Orientierung des Heizelementes 26, als auch ein gleichbleibender Abstand des Heizelementes vom Bodenbereich 27 des Frittiergefäßes 17 gewährleistet. In dem Halter 15 sind der Thermostat 28, sowie ein über einen Druckknopf 29 manuell zurücksetzbarer Sicherungsthermostat angeordnet. Die Thermostaten sind mit (nicht dargestellten) Temperaturfühlern verbunden, die im Bereich der Heizspirale des Heizkörpers 26 montiert sind. Man erkennt aus der Querschnittsdarstellung der Figur 3, dass das Frittiergefäß 17 nur an wenigen Punkten 30 mit dem Gehäuse 11 in Kontakt steht. Die Kontaktpunkte 30 können als Teflon- oder Silikonplättchen ausgebildet sein, welche den thermischen Kontakt weiter reduzieren.

In den Figuren 4-7 sind verschiedenste Ausführungsformen 17', 17", 17"", 17"" des Frittiergefäßes 17 dargestellt.

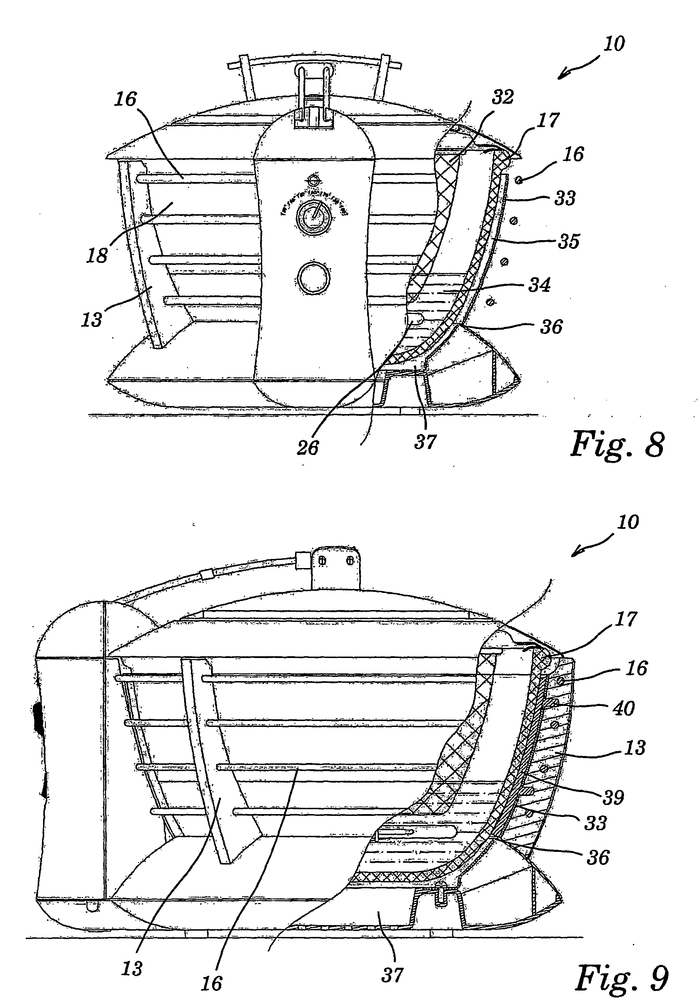

In Figur 8 ist eine Stirnansicht einer zweiten Ausführungsform der erfindungsgemäßen Fritteuse im Teilschnitt dargestellt. Bauteile, die Bauteilen entsprechen, welche oben bereits unter Bezugnahme auf die Fritteuse 10 der Figuren 1 bis 3 erläutert wurden, oder die eine entsprechende Funktion erfüllen, werden mit denselben Bezugsziffern bezeichnet und im Folgenden nicht oder nur kurz beschrieben. Die Fritteuse 10 der Figur 8 entspricht weitestgehend der Friteuse der Figuren 1 bis 3, wobei zusätzlich auch der herausnehmbare Frittierkorb 32 im Teilschnitt erkennbar ist. Als wesentlicher Unterschied zur Fritteuse der Figuren 1 bis 3 weist die Fritteuse der Figur 8 einen Schutzmantel 33 aus einem transparenten Kunststoffmaterial, beispielsweise aus Plexigals, auf, der das Frittiergefäß 17 außen umgibt. Wenn das Frittiergefäß 10 beispielsweise durch unsachgemäße Benutzung zerbrechen sollte, verhindert der Schutzmantel 33 wirksam, dass Glasbruchstücke oder heißes Öl 34 seitlich durch die offenen Zwischenräume 18 zwischen den ringförmigen Metallstreben 16 nach außen fliegen oder spritzen können. Zwischen dem Frittiergefäß 17 und dem Schutzmantel 33 ist ein Luftspalt 35 ausgebildet, der eine thermische Trennung von Frittiergefäß und Schutzmantel bewirkt, so dass der Schutzmantel 33 auch im Betrieb der Fritteuse nur mäßig erwärmt wird. Der Schutzmantel 33 ist in seinem unteren Bereich 36 offen und kann so das im Schadensfall austretende Öl 34 in den unteren Bereich 37 der Fritteuse 10 leiten.

Figur 9 zeigt eine Seitenansicht der Fritteuse der Figur 8 im Teilschnitt. Man erkennt insbesondere, dass im unteren Bereich 37 der Fritteuse Öffnungen 38 mit kleinem Durchmesser vorgesehen sind, die einerseits das Öl langsam und kontrolliert austreten lassen und andererseits als Filtermittel wirken, welche Bruchstücke des Frittiergefäßes 17 zurückhalten. Ferner ist ein als Befestigungsmittel zum Fixieren des Schutzmantels 33 dienender Halter 39 vorgesehen, der vorspringende Stifte 40 aufweist, die durch entsprechende Bohrungen in dem Schutzmantel 33 in Vertiefungen eingreift, die in den Trägern 13 ausgespart sind. Die Stifte 40 können durch Presssitz halten oder in den Vertiefungen permanent verklebt werden. Im ersteren Fall kann der Schutzmantel 33 auch lösbar befestigt werden. Wie man erkennt, dient der Halter 39 gleichzeitig als Abstandshalter für das Frittiergefäß 17, um so den Luftspalt 35 zu gewährleisten. In der Variante der Figuren 8 und 9 ist die Innenkontur des Halters 39 im wesentlichen der Innenkontor des Frittiergefäßes 17 angepasst, so dass das Gefäß 17 auf der Innenseite des Halters 39 aufliegt.

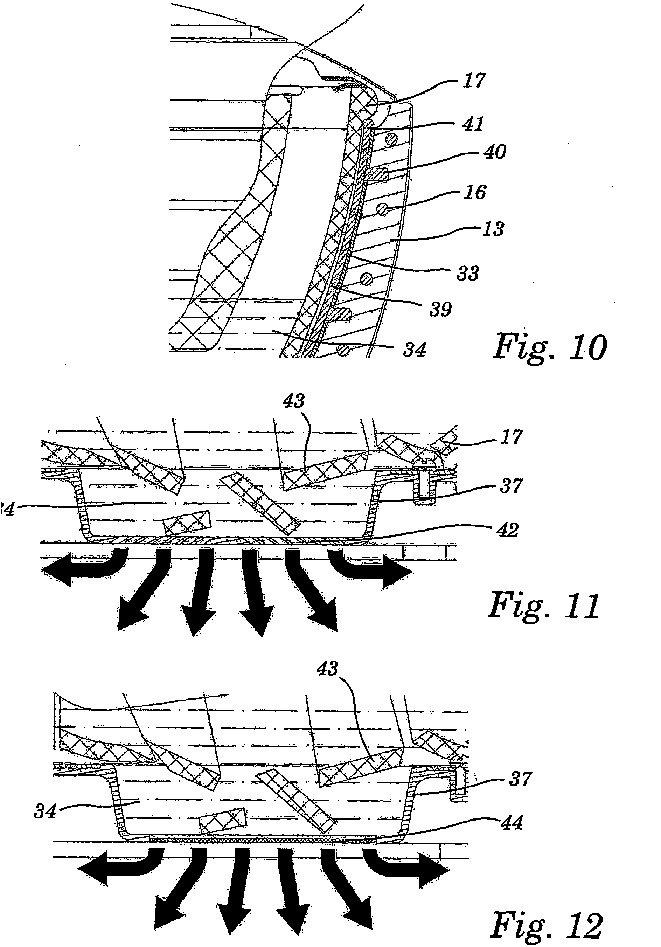

Demgegenüber wird bei der in Figur 10 dargestellte Variante das Frittiergefäß 17 von der Oberkante 41 des Halters 39 getragen, so dass auch im Bereich des Halters ein gewisser Luftspalt 35 vorhanden ist.

In Figur 11 ist eine Variante des Bodenbereichs der Fritteuse der Figuren 8 und 9 im Querschnitt dargestellt, bei welcher die Filtermittel der Auslassöffnungen als gitterartiges Sieb oder Netz 42 ausgebildet sind. Wie man erkennt ist das Frittiergefäß 17 bei der Darstellung der Figur 11 zerbrochen, aber die Filtermittel halten die Glasbruchstücke 43 wirksam zurück, währen das Öl 34 , wie durch die Pfeile dargestellt, nach unten abfließen kann.

Figur 12 zeigt eine weitere Variante der erfindungsgemäßen Fritteuse in einer der Figur 11 entsprechenden Darstellung. Bei dieser Variante sind die Filtermittel als poröses Filtermaterial 44 ausgebildet.

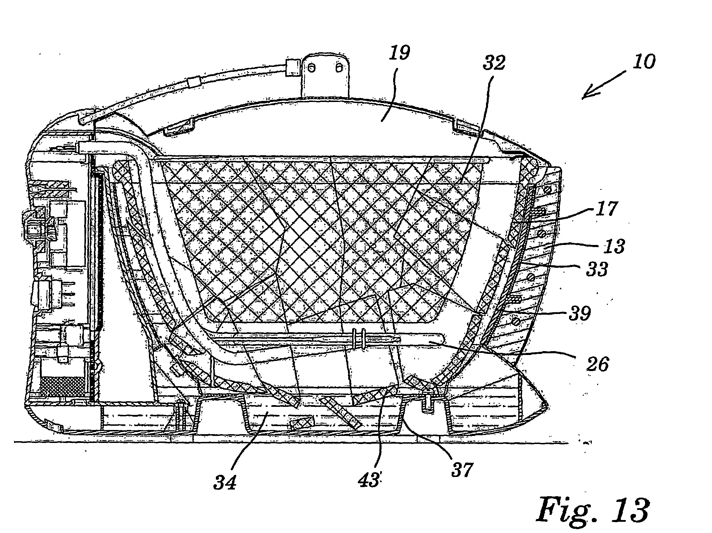

Bei der schließlich in Figur 13 dargestellten Ausführungsform der erfindungsgemäßen Fritteuse ist der Bodenbereich 37 der Fritteuse geschlossen, so dass in dem dargestellten Störfall, bei dem das Frittiergefäß 17 in zahlreiche Bruchstücke 43 zersprungen ist, das Öl 34 nicht aus dem Gehäuse abfließen kann. Das Öl verteilt sich aber so im Bodenbereich 37 der Fritteuse, dass da maximale Ölniveau deutlich unterhalb des Niveaus des Heizspirale 26 der Fritteuse liegt.

## Patentansprüche

1. Fritteuse mit einem Frittiergefäß (17), das vollständig aus einem transparenten oder durchscheinenden Material besteht und mindestens einem in dem Frittiergefäß (17) angeordneten Heizkörper (26),
**dadurch gekennzeichnet, dass**
dass das Frittiergefäß (17) wenigstens teilweise von einem Schutzmantel (33) umgeben ist, der aus einem transparenten oder durchscheinenden Material besteht.

2. Fritteuse gemäß Anspruch 1, **dadurch gekennzeichnet, dass** der Schutzmantel (33) aus Kunststoff, Glass oder einer Kombination dieser Materialien besteht.

3. Fritteuse gemäß Anspruch 2, **dadurch gekennzeichnet, dass** der Schutzmantel (33) farbig ist.

4. Fritteuse gemäß einem der Ansprüche 1 bis 3, **dadurch gekennzeichnet, dass** der Schutzmantel (33) eine geschlossenen Bodenbereich (36) aufweist.

5. Fritteuse gemäß einem der Ansprüche 1 bis 3, **dadurch gekennzeichnet, dass** der Schutzmantel (33) einen offenen Bodenbereich (36) aufweist.

6. Fritteuse gemäß Anspruch 5, **dadurch gekennzeichnet, dass** der offene Bodenbereich (36) in einen mit Filtermitteln (38,42,44) versehenen Auslaß mündet.

7. Fritteuse gemäß einem der Ansprüche 1 bis 6, **dadurch gekennzeichnet, dass** Befestigungsmittel (39) zum Fixieren des Schutzmantels (33) in der Friteuse (10) vorgesehen sind.

8. Fritteuse gemäß einem der Ansprüche 1 bis 7, **dadurch gekennzeichnet, dass** zwischen dem Frittiergefäß (17) und dem Schutzmantel (33) ein Luftspalt (35) definiert ist.

9. Fritteuse gemäß den Ansprüche 7 oder 8, **dadurch gekennzeichnet, dass** die Befestigungsmittel (39) gleichzeitig als Abstandshalter für das Frittiergefäß (17) dienen.

10. Fritteuse gemäß einem der Ansprüche 1 bis 8, **dadurch gekennzeichnet, dass** der Schutzmantel (33) lösbar in der Fritteuse angeordnet ist.

11. Fritteuse gemäß einem der Ansprüche 1 bis 10, **dadurch gekennzeichnet, dass** das transparente Material Glas, ein temperaturbeständiger Kunststoff, Metall oder eine Werkstoffkombination dieser Materialien ist.

12. Fritteuse gemäß einem der Ansprüche 1 bis 11, **dadurch gekennzeichnet, dass** das Frittiergefäß (17) gefärbt ist.

13. Fritteuse gemäß einem der Ansprüche 1 bis 12, **dadurch gekennzeichnet, dass** der Heizkörper (26) herausnehmbar im Bereich des Bodens (27) des Frittiergefäßes (17) angeordnet ist.

14. Fritteuse gemäß Anspruch 13, **dadurch gekennzeichnet, dass** der Heizkörper (26) mit einem Halter (15) verbunden ist, der einen Thermostaten (28) zur Regelung der Heizleistung des Heizkörpers (26) aufweist.

15. Fritteuse gemäß einem der Ansprüche 1 bis 14, **dadurch gekennzeichnet, dass** die Fritteuse (10) außerdem ein zumindest teilweise transparentes Gehäuses (11) aufweist, in welchem das Frittiergefäß (17) angeordnet ist.

16. Fritteuse gemäß Anspruch 15, **dadurch gekennzeichnet, dass** das Gehäuse (11) zumindest teilweise aus einem durchsichtigen Kunststoffmaterial besteht.

17. Fritteuse gemäß Anspruch 15, **dadurch gekennzeichnet, dass** das Gehäuse (11) Metall- und/oder Kunststoffstreben (16) aufweist, zwischen denen offene Zwischenräume (18) ausgespart sind.

18. Fritteuse gemäß einem der Ansprüche 15 bis 17, **dadurch gekennzeichnet, dass** das Frittiergefäß (17) herausnehmbar in dem Gehäuse (11) angeordnet ist.

19. Fritteuse gemäß einem der vorherigen Ansprüche, **dadurch gekennzeichnet, dass** die Fritteuse (10) einen herausnehmbaren Korb (32) für Frittiergut umfasst.

20. Fritteuse gemäß einem der vorherigen Ansprüche, **dadurch gekennzeichnet, dass** das Frittiergefäß (17) durch einen abnehmbaren Deckel (19) verschließbar ist.

## Claims

1. Deep fat fryer comprising a vessel (17) made entirely from a transparent or translucent material and at least one heating element (26) arranged in said vessel (17),
**characterized in that**
a protective guard (33) made from a transparent or translucent material is at least partially provided circumferentially around said vessel (17).

2. Deep fat fryer according to claim 1, **characterized in that** said protective guard (33) is made from plastic, glass or a combination of said materials.

3. Deep fat fryer according to claim 2, **characterized in that** the protective guard (33) is coloured.

4. Deep fat fryer according to one of claims 1 - 3, **characterized in that** the guard (33) is provided with a closed bottom part (36).

5. Deep fat fryer according to one of claims 1 - 3, **characterized in that** the guard (33) is provided with a open bottom part (36).

6. Deep fat fryer according to claim 5, **characterized in that** the open bottom part (36) leads into a discharge aperture which is provided with filter means (38,42,44).

7. Deep fat fryer according to one of claims 1 - 6, **characterized in that** fixing means (39) are provided to maintain said guard (33) in said fryer (10).

8. Deep fat fryer according to one of claims 1 - 7 , **characterized in that** an air gap (35) is provided between said vessel (17) and said guard (35).

9. Deep fat fryer according to claim 7 and 8, **characterized in that** said fixing means (39) also act as spacers for said vessel (17).

10. Deep fat fryer according to one of claims 1 - 8, **characterized in that** said guard (33) is removably arranged in said fryer.

11. Deep fat fryer according to one of claims 1 - 10, **characterized in that** the transparent or translucent material of said vessel (17) is either glass, a temperature resistant plastics, or metal or a combination of these materials.

12. Deep fat fryer according to one of claims 1 to 11, **characterized in that** the vessel is coloured.

13. Deep fat fryer according to one of claims 1 to 12, **characterized in that** the heating element (26) is removably arranged near the bottom of vessel (17).

14. Deep fat fryer according to claim 13, **characterized in that** the heating element (26) is connected to a mount (15) which comprises a thermostat (28) for controlling the heating output of said heating element (26).

15. Deep fat fryer according to one of claims 1 to 14, **characterized in that** said deep fat fryer (10) further comprises an at least partially transparent housing (11) which accommodates said vessel (17).

16. Deep fat fryer according to claim 15, **characterized in that** the housing (11) is at least partially made from a transparent plastics.

17. Deep fat fryer according to claim 15, **characterized in that** the housing (11) comprises metallic and/or plastic struts (16) with a clear spacing (18) being provided between said struts.

18. Deep fat fryer according to one of claims 15 to 17, **characterized in that** said vessel (17) is removably arranged in said housing (11).

19. Deep fat fryer according to any of the preceding claims, **characterized in that** said fryer (10) comprises a removable basket (32) which accommodates the goods to be fried.

20. Deep fat fryer according to any of the preceding claims, **characterized in that** said vessel (17) is provided with a removable lid (19).

## Revendications

1. Friteuse comportant un récipient de friture (17), qui est entièrement composé d'un matériau transparent ou translucide, et comportant au moins un corps chauffant (26) disposé dans le récipient de friture (17),
**caractérisée en ce que** le récipient de friture (17) est au moins partiellement entouré d'une enveloppe de protection (33), qui se compose d'un matériau transparent ou translucide.

2. Friteuse selon la revendication 1, **caractérisée en ce que** l'enveloppe de protection (33) se compose de matière plastique, de verre ou d'une combinaison de ces matériaux.

3. Friteuse selon la revendication 2, **caractérisée en ce que** l'enveloppe de protection (33) est colorée.

4. Friteuse selon l'une des revendications 1 à 3, **caractérisée en ce que** l'enveloppe de protection (33) présente une zone de fond (36) fermée.

5. Friteuse selon l'une quelconque des revendications 1 à 3, **caractérisée en ce que** l'enveloppe de protection (33) présente une zone de fond (36) ouverte.

6. Friteuse selon la revendication 5, **caractérisée en ce que** la zone de fond ouverte (36) débouche dans une évacuation pourvue de moyens de filtration (38, 42, 44).

7. Friteuse selon l'une quelconque des revendications 1 à 6, **caractérisée en ce qu'**il est prévu des moyens de fixation (39) pour fixer l'enveloppe de protection (33) dans la friteuse (10).

8. Friteuse selon l'une quelconque des revendications 1 à 7, **caractérisée en ce qu'**un entrefer (35) est formé entre le récipient de friture (17) et l'enveloppe de protection (33).

9. Friteuse selon la revendication 7 ou la revendication 8, **caractérisée en ce que** les moyens de fixation (39) servent en même temps d'éléments d'écartement pour le récipient de friture (17).

10. Friteuse selon l'une quelconque des revendications 1 à 8, **caractérisée en ce que** l'enveloppe de protection (33) est disposée de façon amovible dans la friteuse.

11. Friteuse selon l'une quelconque des revendications 1 à 10, **caractérisée en ce que** le matériau transparent est du verre, une matière plastique résistante aux hautes températures, du métal ou une combinaison de ces matériaux.

12. Friteuse selon l'une quelconque des revendications 1 à 11, **caractérisée en ce que** le récipient de friture (17) est coloré.

13. Friteuse selon l'une quelconque des revendications 1 à 12, **caractérisée en ce que** le corps chauffant (26) est disposé de façon amovible dans la zone de fond (27) du récipient de friture (17).

14. Friteuse selon la revendication 13, **caractérisée en ce que** le corps chauffant (26) est relié à un support (15), qui présente un thermostat (28) pour la régulation de la puissance de chauffe du corps chauffant (26).

15. Friteuse selon l'une quelconque des revendications 1 à 14, **caractérisée en ce que** la friteuse (10) présente en outre un boîtier (11) au moins partiellement transparent, dans lequel est disposé le récipient de friture (17).

16. Friteuse selon la revendication 15, **caractérisée en ce que** le boîtier (11) se compose au moins partiellement d'un matériau en matière plastique translucide.

17. Friteuse selon la revendication 15, **caractérisée en ce que** le boîtier (11) présente des renforts de métal et/ou de matière plastique (16), entre lesquels sont aménagés des espaces intermédiaires ouverts (18).

18. Friteuse selon l'une quelconque des revendications 15 à 17, **caractérisée en ce que** le récipient de friture (17) est disposé de façon amovible dans le boîtier (11).

19. Friteuse selon l'une quelconque des revendications précédentes, **caractérisée en ce que** la friteuse (10) comprend un panier (32) amovible pour les aliments frits.

20. Friteuse selon l'une quelconque des revendications précédentes, **caractérisée en ce que** le récipient de friture (17) peut être fermé par un couvercle (19) amovible.
